# EUROPEAN PATENT SPECIFICATION

(11) **EP 1 767 463 B1**
(45) Date of publication and mention of the grant of the patent: **08.06.2011**
(21) Application number: 06120352.7
(22) Date of filing: 08.09.2006
(51) Int. Cl.: B65D 41/04

(54) **Grippable lid**
Greifbarer Verschluß
Fermeture préhensible

(30) Priority: 27.09.2005 US 235103
(43) Date of publication of application: 28.03.2007
(73) Proprietor: Kraft Foods Global Brands LLC, Northfield, IL 60093 (US)
(72) Inventor: Kaufman, Richard H., Chappaqua, NY 10514 (US)
(74) Representative: Murray, Adrian D'Coligny

(56) References cited:
- US-A- 5 443 172
- US-A1- 2005 145 593

## Description

### FIELD OF THE INVENTION

The present invention relates to a lid, and in particular, a lid with an improved grippable surface.

### BACKGROUND OF THE INVENTION

Many containers such as jars have a top opening and a lid or other closure to cover or close over the opening. One typical arrangement includes a threaded jar neck opening onto which a correspondingly threaded lid twists on and off. In order to provide a grippable surface, some lids include ribs or grooves along their axially extending portion, commonly known as the skirt of the lid, to provide enhanced grippability and thus allow one to more easily twist the lid on and off the neck of the container.

U.S. Patent No. 6,481,589 discloses a jar closure in which a rigid piece forms a first part of the closure, including its skirt, and a second part is molded onto the first, rigid part, to define a portion of the periphery of the exterior of the closure. The second part is formed within an inlay or void of the skirt so that the resulting closure has the second part flush with the outer surface of the skirt and/or the top of the first part of the closure.

U.S. Patent Application Publication No. 2005/0145593 discloses a closure with a soft feel gripping surface in which an in-mold label forms a thin gripping surface over the skirt of a closure. US 5443172 describes a non-slip closure grip for a receptical having an upper portion with external threads. The closure comprises a cap member having a top surface and an annualar depending skirt with internal threads for engaging with the external threads on the upper portion with the receptical. An assembly about the perimeter of the annular depending skirt of the cap member is for providing a gripping surface. Reduced strength is required by a person to open the cap member and thus the cap is particularly suitable for use by elderly and handicap people.

There exists a need in the art for improved closures with grippable surfaces which allow one to more easily open and close a container.

### BRIEF SUMMARY OF THE INVENTION

The present invention concerns a closure cap comprising: a cap having a top and a skirt;
an outer layer of a material softer than the skirt, said outer layer adhered to
the outer surface of the skirt by being intermolecularly bonded thereto, the outer layer having a thickness of greater than 1.016 mm (40 mils). Advantageously, the outer layer forms a strong bond to the skirt by an intermolecular bond in which respective materials from the outer layer and the skirt are intermixed with one another.

According to a further aspect of the present invention there is provided a method of manufacturing a closure, said method comprising: forming a cap having a skirt using a first step of a two shot injection molding process; forming an outer layer of material on the skirt using a second step of the two shot injection molding process to intermolecularly bond the outer layer to the skirt, the outer layer of material being softer than the skirt having a thickness greater than 1.016 mm (40 mils).

These and other objects of the present invention will become apparent from the brief description of the drawings which follows, together with the detailed description of the preferred embodiments.

### BRIEF DESCRIPTION OF THE DRAWINGS

There follows a detailed description of the preferred embodiments of the present invention, to be read together with the accompanying drawings, wherein:

Figure 1 is a perspective view of a closure in accordance with the present invention.

Figure 2 is a cross sectional view of the closure taken along line 2-2 of Figure 1.

Figure 3 is an enlarged partial view of the closure from box 15 from Figure 2.

Figure 4 is an elevational view of a closure and container in accordance with the present invention.

### DETAILED DESCRIPTION OF THE PREFERRED EMBODIMENTS

Referring to the drawings, like elements are represented by like numbers throughout the several views.

Closure 10 has a cap with a top 11 and a skirt 12. Advantageously, the cap is formed of a plastic material or polymer using injection molding in a first step of a two-shot molding process. The cap can be composed of polyethylene or polypropylene. Alternatively, the cap can be formed of any other suitable material known to one of ordinary skill in the art.

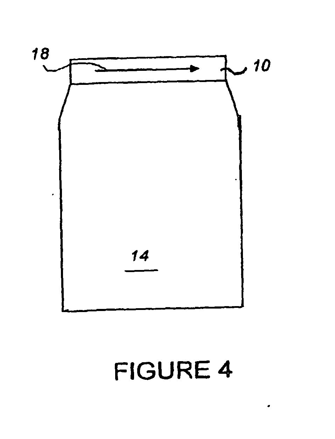

The closure 10 includes an outer layer 13 which is adhered to the skirt 12, preferably covering substantially the entire surface of skirt 12. The outer layer 13 forms a strong bond with skirt 12 so that the outer layer 13 does not slip or move relative to the skirt 12 when twisted to open or close a container 14 (Figure 4).

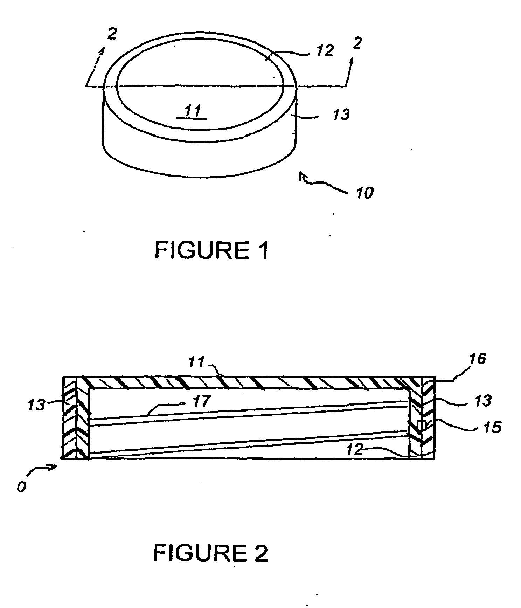

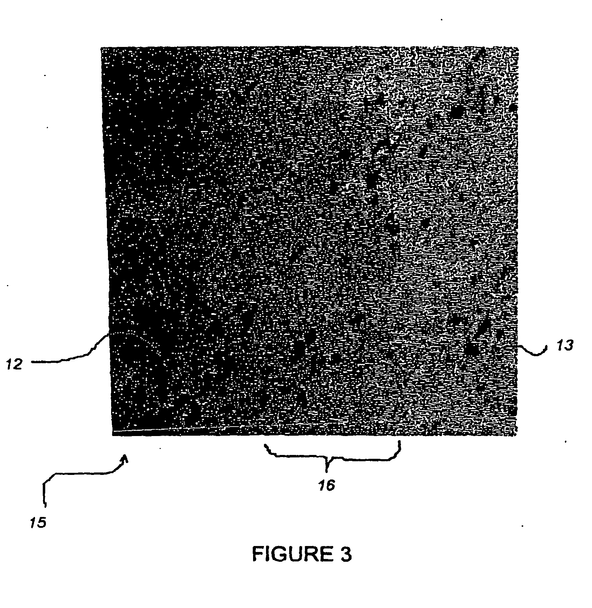

In one advantageous method of making the closure 10, the outer layer 13 is formed during the second step of a two-shot molding process. The resulting skirt 13 is intermolecularly bonded to the skirt 12 such that interface 16 formed therebetween includes material from the skirt 12 and outer layer 13 intermixed with one another, as shown In Figure 3 which is an enlargement of box 15 of Figure 2.

The outer layer 13 is preferably 1.016-1.524 mm (40-60 mils). These thicknesses provide a comfortable grippable surface along the skirt 12 of the closure 10 to allow one to easily grip and open the container 14. The outer layer 13 can be formed of any suitable soft material which includes rubberized elastomer.

Although the preferred method of forming closure 10 is two-shot injection molding, alternatively any other manufacturing process known to one of ordinary skill in the art can be used which forms a skirt 12 with a sufficiently strong bonded or adhered softer outer layer.

In one application or use, closure 10 has threads 17 on the interior surface of skirt 12 which allows closure 10 to be removed from container 14 which has complementary threads (not shown), by twisting or rotating closure 10 in a counterclockwise direction as indicated by arrow 18 of Figure 4.

It will now be apparent to one of ordinary skill in the art that the present closure offers advantages and features not found in prior closures. For example the present closure includes a sufficiently thick outer layer of a soft material which provides a comfortable and grippable surface. An additional advantageous feature of the present closure is an outer layer sufficiently bonded to a skirt by being intermolecularly bonded thereto, thereby ensuring that the outer layer will not slip relative to the skirt when opening or closing a container.

Although the invention has been described above in relation to preferred embodiments thereof, it will be understood by those skilled in the art that variations and modifications can be effected in these preferred embodiments without departing from the scope of the invention as defined by the appended claims.

## Claims

1. A closure cap (10) comprising:
a cap having a top (11) and a skirt (12);
an outer layer (13) of a material softer than the skirt (12), **characterised in that** said outer layer is adhered to the outer surface of the skirt (12) by being intermolecularly bonded thereto, the outer layer (13) having a thickness of greater than 1.016 mm (40 mils).

2. The closure of Claim 1, wherein said outer layer (13) has a thickness of 1.016-1.524 mm (40-60 mils).

3. The closure of Claim 1 or 2, wherein said outer layer comprises a rubberized elastomer.

4. A method of manufacturing a closure (10), said method comprising:
forming a cap having a skirt (12) using a first step of a two shot injection molding process; **characterised by**
forming an outer layer (13) of material on the skirt (12) using a second step of the two shot injection molding process to intermolecularly bond the outer layer (13) to the skirt (12), the outer layer (13) of material being softer than the skirt and having a thickness greater than 1.016 mm (40 mils).

5. The method of Claim 4, including forming the outer layer (13) with a thickness of 1.016-1.524 mm (40-60 mils).

6. The method of Claim 4 or 5, including forming the outer layer (13) such that it covers substantially the entire surface of the skirt (12).

7. The method of any one of Claims 4 to 6, including forming the outer layer (13) with a rubberized elastomer.

## Patentansprüche

1. Verschlusskappe (10), die Folgendes umfasst:
eine Kappe mit einer Oberseite (11) und einem Rand (12);
eine äußere Schicht (13) aus einem weicheren Material als der Rand (12), **dadurch gekennzeichnet, dass** die äußere Schicht an die Außenfläche des Rands (12) durch intermolekulares Binden an dieselbe angehaftet wird, wobei die äußere Schicht (13) eine Dicke größer als 1,016 mm (40 mils) aufweist.

2. Verschluss von Anspruch 1, bei dem die äußere Schicht (13) eine Dicke von 1,016-1,524 mm (40-60 mils) hat.

3. Verschluss von Anspruch 1 oder 2, bei dem die äußere Schicht ein gummiertes Elastomer aufweist.

4. Verfahren zum Herstellen eines Verschlusses (10), wobei das Verfahren folgende Schritte umfasst:
Bilden einer Kappe mit einem Rand (12) unter Verwendung eines ersten Schritts eines Two-Shot-Spritzgussprozesses; **gekennzeichnet durch**
Bilden einer äußeren Materialschicht (13) auf dem Rand (12) unter Verwendung eines zweiten Schritts des Two-Shot-Spritzgussprozesses, um die äußere Schicht (13) intermolekular an den Rand (12) zu binden, wobei die äußere Materialschicht (13) weicher als der Rand ist und eine Dicke größer als 1,016 mm (40 mils) hat.

5. Verfahren nach Anspruch 4, das einschließt, die äußere Schicht (13) mit einer Dicke von 1,016-1,524 mm (40-60 mils) auszubilden.

6. Verfahren nach Anspruch 4 oder 5, das einschließt, die äußere Schicht (13) so auszubilden, dass sie im Wesentlichen die gesamte Oberfläche des Rands (12) bedeckt.

7. Verfahren nach einem der Ansprüche 4 bis 6, das den Schritt umfasst, die äußere Schicht (13) mit einem gummierten Elastomer auszubilden.

## Revendications

1. Capsule de fermeture (10) comprenant :
une capsule munie d'un dessus (11) et d'une jupe (12) ;
une couche extérieure (13) d'une matière plus molle que la jupe (12),
**caractérisée en ce qu'**on fait adhérer la couche extérieure à la surface extérieure de la jupe (12) par liaison intermoléculaire, la couche extérieure (13) ayant une épaisseur supérieure à 1,016 mm (40 mils).

2. Capsule conforme à la revendication 1, où la couche extérieure (13) a une épaisseur de 1,016 à 1,524 mm (40 à 60 mils).

3. Capsule conforme à la revendication 1 ou 2, où ladite couche extérieure comprend un élastomère caoutchouté.

4. Procédé de fabrication d'une fermeture (10), ledit procédé comportant :
la formation d'une capsule munie d'une jupe (12) à l'aide d'une première étape d'un processus de moulage par bi-injection, **caractérisée par** la formation d'une couche extérieure (13) de matière sur la jupe (12) à l'aide d'une deuxième étape du processus de moulage par bi-injection afin de lier par liaison intermoléculaire la couche extérieure (13) à la jupe (12), la couche extérieure (13) étant en matière plus molle que la jupe et étant dotée d'une épaisseur supérieure à 1,016 mm (40 mils).

5. Procédé conforme à la revendication 4, comportant la formation de la couche extérieure (13) d'une épaisseur de 1,016 à 1,524 mm (40 à 60 mils).

6. Procédé conforme à la revendication 4 ou 5, comportant la formation de la couche extérieure (13) de manière à ce qu'elle couvre sensiblement la surface entière de la jupe (12).

7. Procédé conforme à une quelconque des revendications 4 à 6, comportant la formation de la couche extérieure (13) avec un élastomère caoutchouté.
